Europäisches Patentamt

European Patent Office

Office européen des brevets

(19)

(11) EP 1 276 549 B1

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(21) Anmeldenummer: **01940347.6**

(22) Anmeldetag: **20.04.2001**

(51) Int Cl.7: **B01D 53/94**, F01N 3/28, B01D 45/08

(86) Internationale Anmeldenummer:
**PCT/EP2001/004486**

(87) Internationale Veröffentlichungsnummer:
**WO 2001/080978 (01.11.2001 Gazette 2001/44)**

(54) **VERFAHREN ZUM ENTFERNEN VON RUSSPARTIKELN AUS EINEM ABGAS UND ZUGEHÖRIGES AUFFANGELEMENT**

METHOD FOR REMOVING SOOT PARTICLES FROM AN EXHAUST GAS AND CORRESPONDING COLLECTING ELEMENT

PROCEDE PERMETTANT D'ELIMINER DES PARTICULES DE SUIE DE GAZ D'ECHAPPEMENT ET ELEMENT COLLECTEUR ASSOCIE

(84) Benannte Vertragsstaaten:
**DE ES FR GB IT**

(30) Priorität: **25.04.2000 DE 10020170**

(43) Veröffentlichungstag der Anmeldung:
**22.01.2003 Patentblatt 2003/04**

(73) Patentinhaber: **Emitec Gesellschaft für Emissionstechnologie mbH**
**53797 Lohmar (DE)**

(72) Erfinder:
• **HODGSON, Jan**
**53842 Troisdorf (DE)**
• **BRÜCK, Rolf**
**51429 Bergisch Gladbach (DE)**

• **REIZIG, Meike**
**53225 Bonn (DE)**

(74) Vertreter: **Kahlhöfer, Hermann, Dipl.-Phys. et al Patentanwälte**
**Kahlhöfer Neumann**
**Herzog Fiesser**
**Karlstrasse 76**
**40210 Düsseldorf (DE)**

(56) Entgegenhaltungen:
EP-A- 0 369 163    EP-A- 1 072 765
WO-A-90/12950    WO-A-91/01178
WO-A-97/49905    DE-A- 3 723 478
DE-A- 4 203 807    US-A- 4 597 262
US-A- 4 987 034

**Beschreibung**

Die Erfindung betrifft ein Verfahren zum Entfernen von Rußpartikeln aus einem Abgas, insbesondere einer Verbrennungskraftmaschine, und ein dafür geeignetes Auffangelement, insbesondere eines, das regenerierbar ist und in ein Rohr, wie z.B. in den Abgasstrang eines Kraftfahrzeugs, einbaubar ist.

Das Abgas einer Verbrennungskraftmaschine enthält neben gasförmigen Bestandteilen auch Partikel. Diese gelangen mit dem Abgas direkt in die Umwelt, was unerwünscht ist, oder lagern sich oft irgendwo im Abgassystem ab, so dass sie z. B. bei Laständerungen dann in Form einer Partikelwolke ausgestoßen werden.

Herkömmlich werden Filter eingesetzt, die die Partikel auffangen. Der Einsatz geschlossener Filtersysteme birgt jedoch zwei erhebliche Nachteile, zum einen können diese Filter verstopfen und zum anderen bewirken sie einen unerwünschten Druckabfall. Wenn keine Filter eingesetzt werden, dann lagern sich möglicherweise die Partikel, die nicht direkt in die Umgebung gelangen, auf der Beschichtung eines eingebauten Katalysators zur Abgasreinigung von anderen . Schadstoffkomponenten ab und führen dort zu einer Vergiftung oder zumindest zu einer Verringerung der katalytisch aktiven Oberfläche. Im Zuge immer strengerer Gesetze zum Schutz der Umwelt soll der Ausstoß an Schadstoffen und Partikeln weiter reduziert werden. Neben der Beseitigung von Partikeln spielt auch die Reduzierung von Stickoxiden eine wichtige Rolle bei der Abgasreinigung. Aus der DE 42 03 807 ist eine Vorrichtung hierzu bekannt, bei der ein Oxidationsmittel eingespritzt und mit dem Abgas vermischt wird.

Die nachveröffentlichte EP 1 072 765 A2 betrifft ein Verfahren sowie eine Vorrichtung zur Abscheidung von Feinstpartikeln aus dem Abgas von Brennhraftmaschinen. Zur Abscheidung von Rußpartikeln wird vorgeschlagen, sich die Effekte der Thermophorese, der Konvektion und/oder der Diffusion nutzbar zu machen. Die Oxidation der abgeschiedenen Rußpartikel erfolgt durch Stickstoffdioxid, welches in einem vorgeschalteten Katalysator durch katalytische Oxidation von Stockstoffmonoxid mittels des im Abgas enthaltenen Restsauerstoffes entsteht. Es besteht jedoch das Problem, dass in der Vorrichtung nicht zwangsläufig, örtlich und/oder zeitlich, die entsprechende Verteilung der Reaktionspartner vorliegt, nämlich insbesondere Ruß und Stickstoffdioxid.

Eine weitere Vorrichtung für die Abscheidung von Ruß aus dem Abgas eines Verbrennungsmotors geht beispielsweise aus der DE 37 23 478 A1 hervor. Dabei wird vorgeschlagen, dass die Vorrichtung mäanderförmige Strömungskanäle mit Außenbögen und Innenbögen bildenden Wandelementen aufweist Diese sind so ausgestaltet, dass eine Drallströmung hin zu diesen Wandelementen erzeugt wird. Aufgrund der Zentrifugalkraft sammeln sich die Rußpartikel in einer Grenzschicht an und genau diese Grenzschicht wird in Rußfangschächte geführt Der so abgeschiedene Ruß wird einer Rußverbrennungskammer zugeführt. Der Aufbau ist sehr komplex und erfordert unter Umständen das zusätzliche Abführen des Rußes aus den Rußfangschächten selbst.

In einem anderen technischen Gebiet, nämlich der Bereitstellung von Mischstrukturen im Abgassystem von Verbrennungskraftmaschinen, wurden Wabenkörper mit internen Strömungsleitflächen eingesetzt, wie sie beispielsweise aus der WO 91/01178 hervorgehen. Der zumindest teilweise strukturierte Blechlagen aufweisende Wabenkörper hat in den Kanalwänden kleine Strömungsleitflächen, welche schräg zur Kanalwand verlaufen. Dadurch wird eine Druckdifferenz zwischen benachbarten Kanälen erzeugt, die zu einer Quervermischung der benachbarten Strömungen in den Kanälen fuhren. Derartige Wabenkörper wurden als Strömungsmischer sowie gegebenenfalls als Katalysator-Trägerkörper eingesetzt.

Aufgabe der vorliegenden Erfindung ist es, ein Verfahren zum Entfernen von Rußpartikeln aus einem Abgas anzugeben sowie ein Auffangelement für Partikel eines Abgasstromes zu schaffen.

Diese Aufgaben werden gelöst mit einem Verfahren mit den Merkmalen des Anspruchs 1 sowie einem Abgassystem gemäß den Merkmalen des Anspruchs 5. Weitere vorteilhafte Ausgestaltungen sind in den jeweils abhängigen Ansprüchen beschrieben. Weiterhin werden bevorzugte Verwendungen des Auffangelementes angegeben.

Bei Versuchen mit Mischelementen, wie sie beispielsweise in der WO91/01807 oder der WO91/01178 beschrieben sind und die zur besseren Verteilung von in Abgassysteme eingespritzten Additiven getestet wurden, hat sich überraschend ergeben, dass solche Elemente auch zu einer Reduzierung von Rußpartikeln führen können. Die Partikel werden vermutlich durch die Verwirbelungen im Inneren der Mischelemente, die an Umlenkstellen in der Strömung entstehen, aufgehalten oder werden an die Wände im Inneren des Mischelementes quasi angespült (vergleichbar einer Schwerkraftabscheidung) und haften dann fest. Bei der Haftung der Partikel spielt eine mögliche Wechselwirkung Metall-Ruß und/oder auch der Temperaturgradient Abgas/Kanalwand eine Rolle. Es wird auch eine starke-Agglomeration der Partikel, insbesondere bei unbeschichteten und metallischen Wänden, beobachtet. Diese Erkenntnisse macht sich die vorliegende Erfindung zunutze, indem ein Auffangelement so gestaltet wird, dass Rußpartikel so lange dort aufgehalten werden, dass eine genügende Wahrscheinlichkeit zur Reaktion mit im Abgas vorhandenem Stickstoffdioxid besteht.

Es wird also nicht der übliche Weg beschriften, Rußpartikel durch poröse Wände oder dergleichen sozusagen zwangsweise zu 100 % herauszufiltern, sondern es wird einfach die Wahrscheinlichkeit zur -Reaktion von Rußpartikeln mit Stickstoffdioxid erhöht indem die Verweilzeit von Rußpartikeln in dem Auffangelement verlängert wird. Dies geschieht bei an sich frei durchgängigen Strömungswegen durch eine genügende Anzahl von Verwirbelungs- und Beruhigungszonen und/oder durch Umlenkungen, die die Ablagerung der Partikel an den Wänden begünstigen. Während ein mit dem Abgasstrom fliegendes Partikel nur geringe Chancen für die Reaktion mit anderen Abgasbestandteilen hat, erhöhen sich diese Chancen drastisch, wenn das Partikel in einer Verwirbelungszone aufgehalten oder an einer Wand abgelagert wird. All vorbeikommenden Stickstoffdioxide kommen dann für eine Reaktion in Frage und bauen so die Rußpartikel schnell ab. Das Auffangelement kann daher nicht verstopfen, sondern wird stetig regeneriert.

Als Beruhigungszone wird eine Zone im Kanal mit geringer Strömungsgeschwindigkeit und als Totzone eine Zone ohne Fluidbewegung bezeichnet.

Als frei durchgängig wird das Auffangelement im Gegensatz zu geschlossenen Systemen deshalb bezeichnet, weil keine Strömungssackgassen vorgesehen sind. So kann das Auffangelement nicht verstopfen, wie ein herkömmliches Filtersystem, wo sich Poren zusetzen können, weil zuvor die Strömung die Partikel mitreißen würde. Dabei ist es besonders vorteilhaft, dass die Umlenkungen derart gestaltet sind, dass jeweils etwa 2% bis 15% der im Abgas noch enthaltenen Partikel gegen die Wände (11, 12, 21, 22) des Auffangelementes (5) geschleudert werden, wobei ein bevorzugter Bereich zwischen 4% und 8% liegt. Mit der Formulierung "noch im Abgas enthaltenen Partikel" ist berücksichtigt, dass die Menge Partikel in Strömungsrichtung und bei häufigerer Umlenkung des Abgasstromes abnimmt. Die Anzahl der Umlenkungen ist hierzu insbesondere so zu wählen, dass, zumindest statistisch, der gesamte Abgasstrom gegen die Wände des Auffangelementes gelenkt wird. Die mengenmäßige Begrenzung der auftreffenden Partikel bzw. des umzulenkenden Abgasstromes hat den Vorteil, dass nur ein sehr geringer Druckabfall über das Auffangelement auftritt.

Bei dem erfindungemäßen Abgannsystem eines Kraftfalszeuges wird das Auffangelement in Kombination mit zumindest einem Katalysator verwendet Als Katalysatoren und/oder Vorkatalysatoren eignet sich dazu insbesondere: Oxidationskatalysator, Heizkatalysator mit vor- oder nachgeschalteter Heizscheibe, Hydrolysekatalysator und/oder Reduktionskatalysator. Als Oxidationskatalysator werden auch solche die $NO_x$ (nitrose Gase) zu Stickstoffdioxid ($NO_2$) oxidieren, neben denjenigen, die Kohlenwasserstoffe und Kohlenmonoxid zu Kohlendioxid oxidieren, eingesetzt. Die Katalysatoren sind rohr- oder konusförmig.

Zur Abdeckung verschiedener (dynamischer) Lastfälle des Antriebssystems eines Kraftfahrzeugs wird ein konisches System bevorzugt. Solche Systeme, wie z.B. in der WO93/20339 beschrieben, haben sich erweiternde Kanäle, so dass bei jedem Massendurchsatz an irgendeiner Stelle der Kanäle, wenn sie mit entsprechenden Umlenkungs- oder Verwirbelungsstrukturen versehen werden, besonders günstige Verhältnisse für das Auffangen von Partikeln entstehen müssen.

Das Material des Auffangelementes ist bevorzugt Metall, es kann aber auch Kunststoff anorganischer (Keramik, Fasermaterial), organischer oder metallorganischer Natur und/oder ein gesintertes Material sein. Dabei können die Wände des Auffangelementes mit einem Washcoat und/oder katalytisch aktivem Material beschichtet oder unbeschichtet sein.

Die Wandstärke liegt bevorzugt im Bereich zwischen 0,02 und 0,11mm, insbesondere bevorzugt zwischen 0,04 und 0,08 mm.

Die Zelldichten (Zahl der Kanäle pro Querschnittsfläche)eines Auffangelements liegen bevorzugt im Bereich zwischen 25 bis 1000 cells per square inch (cpsi), bevorzugt zwischen 200 und 400 cpsi, wobei 6,4516 cpsi in etwa 1 Zelle pro Quadratzentimeter ($^{Zellen}/_{cm}2$) entsprechen.

Ein typisches Auffangelement hat z.B. 200 cpsi, ein Volumen, bezogen auf einen Dieselmotor, von etwa 0,5 bis 0,8 Liter pro 100kW bzw. eine geometrische Oberfläche von 1 bis 2 $m^2$ pro 100kW, wobei bevorzugt Umlenkungs- oder Verwirbelungsstrukturen in Abständen von 3 bis 20 mm in den Strömungswegen vorhanden sind.

Das Auffangelement ist kontinuierlich oder periodisch regenerierbar, wobei in einem Dieselmotor-Abgasstrang die Regeneration durch die Oxidation des Rußes entweder durch Stickstoffdioxid ($NO_2$) bei Temperaturen oberhalb von ~250°C oder mit Luft bzw. Sauerstoff ($O_2$) thermisch bei Temperaturen >500°C und/oder durch Einspritzung eines Additivs (z.B. Cer) erfolgen kann.

Die Rußoxidation mittels $NO_2$, beispielsweise über den Mechanismus des continuous regneration traps (CRT) nach

$$C + 2NO_2 \rightarrow CO_2 + 2NO$$

erfordert, dass vor das Auffangelement im Abgasstrang ein Oxidationskatalysator gesetzt wird, der NO zu $NO_2$ in ausreichender Menge oxidiert. Untersuchungen haben ergeben, dass bis zur doppelten Menge, bevorzugt das 1,2-fache, (entspricht ca. 2,4 Mol) an $NO_2$ als stöchiometrisch erforderlich zur vollständigen Rußoxidation in das Auffangelement eingespeist werden sollte. Das Mengenverhältnis der Reaktionspartner hängt jedoch auch wesentlich von der Durchmischung der Fluide ab, so dass je nach Ausgestaltung des Auffangelements auch unterschiedliche Mengenverhältnisse eingesetzt werden sollten.

Das Auffangelement kann bei verschiedenen Ausführungsformen noch viele erwünschte Nebeneffekte beim Einbau beispielsweise in einen Kraftfahrzeug-Abgasstrang haben:

Nach einer Ausführungsform hat das Auffangelement neben der Abscheidung von Partikeln auch die Aufgabe des Vermischens des Abgases mit einem weiteren Fluid, wie z.B. die Vermischung von Diesel-Abgas mit Ammoniak oder Harnstofflösung zur Reduktion, wie beispielsweise bei Anwendung des SCR (selective catalytic reduction)-Verfahrens. Dazu wird das Auffangelement mit zumindest einer Additivzugabe kombiniert.

Durch eine vorteilhafte Ausgestaltung des Auffangelements wird auch die Strömungsverteilung des durchfließenden Fluids, z.B. für die folgende Einspeisung in einen Reduktionskatalysator, optimiert. Nach einer Ausführungsform wird das Auffangelement in Kombination mit einer vorgeschalteten Additivzugabe verwendet.

Auch die Kombination des Auffangelements mit zumindest einem Katalysator und einem Turbolader oder die Kombination eines Auffangelements mit einem Turbolader ist vorteilhaft. Dabei kann das dem Turbolader nachgeschaltete Auffangelement motomah oder in Unterbodenposition angeordnet sein.

Das Auffangelement wird auch in Kombination mit einem vor- oder nachgeschalteten Rußfilter verwendet, wobei der Rußfilter nachgeschaltet wesentlich kleiner als ein herkömmlicher Rußfilter sein kann, weil er lediglich einen zusätzlichen Schutz bieten soll, dass Partikelemission ausgeschlossen wird. Beispielsweise genügt ein Filter der Größe 0,5 bis 1m$^2$ pro 100kW Dieselmotor, wohingegen ohne Auffangelement Filtergrößen von ca. 4m$^2$ pro 100kW erforderlich sind.

Folgende Beispiele geben Anordnungen wieder, die die Vielzahl der möglichen Kombinationen des Auffangelements mit Katalysatoren, Turboladern, Rußfilter und Additivzugabe entlang eines Abgasstranges eines Kraftfahrzeugs belegen:

A) Oxidationskatalysator - Turbolader - Auffangelement wobei das Auffangelement motomah oder in Unterbodenposition angeordnet sein kann.

B) Vorkatalysator - Auffangelement - Turbolader

C) Oxidationskatalysator - Turbolader - Oxidationskatalysator-Auffangelement

D) Heizkatalysator - Auffangelement 1 - Auffangelement 2 (wobei Auffangelement 1 und 2 gleich oder ungleich sein können)

E) Auffangelement 1 - Konusöffnung des Abgasstranges - Auffangelement 2

F) Additivzugabe - Auffangelement - Hydrolysekatalysator - Reduktionskatalysator

G) Vorkatalysator - Oxidationskatalysator - Additivzugabe- (eventuell Rußfilter) - Auffangelement z.B. in Konusform, ggf. mit Hydrolysebeschichtung - (eventuell Rußfilter) - (eventuell Konus zur Erhöhung des Rohrquerschnitts) Reduktionskatalysator

Je nach Ausführungsform kann das Auffangelement verschiedene Beschichtungen haben, die jeweils eine Funktionalität bedingen. Beispielsweise kann das Auffangelement neben der Speicher-, Vermischungs-, Strömungsverteilungsfunktion auch eine Funktion als Hydrolysekatalysator haben.

Im folgenden wird die Erfindung noch anhand von bevorzugten Ausgestaltungen näher beschrieben.

Figur 1    zeigt schematisch eine Abgasanlage einer Verbrennungskraftmaschine.

Figur 2    zeigt einen kleinen Ausschnitt aus einer Ausführungsform eines erfindungsgemäßen Auffangelementes.

Figur 3    zeigt einen kleinen Ausschnitt eines anderen Ausführungsbeispiels eines erfindungsgemäßen Auffangelementes.

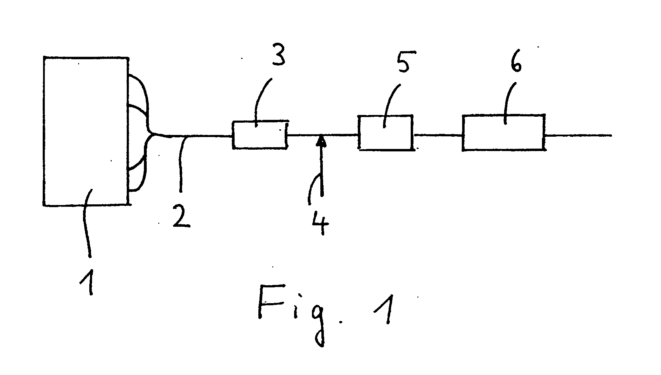

In Fig. 1 ist eine Verbrennungskraftmaschine 1, insbesondere ein Dieselmotor, gezeigt, dessen Abgase in einen Abgasstrang 2 geleitet werden. Der Abgasstrang weist mindestens einen Oxidationskatalysator 3 auf, dem auch noch ein nicht dargestellter sehr nah am Auslass angeordneter Vorkatalysator vorgeschaltet sein kann. In diesem Bereich kann außerdem ein ebenfalls nicht dargestellter Turbolader vorhanden sein. Weiter folgt im Abgasstrang eine Einspeisung 4 für ein Additiv, insbesondere Harnstoff. Stromabwärts dieser Einspeisung ist ein erfindungsgemäßes Auffangelement angeordnet, dem wiederum ein SCR-Katalysator nachgeschaltet ist.

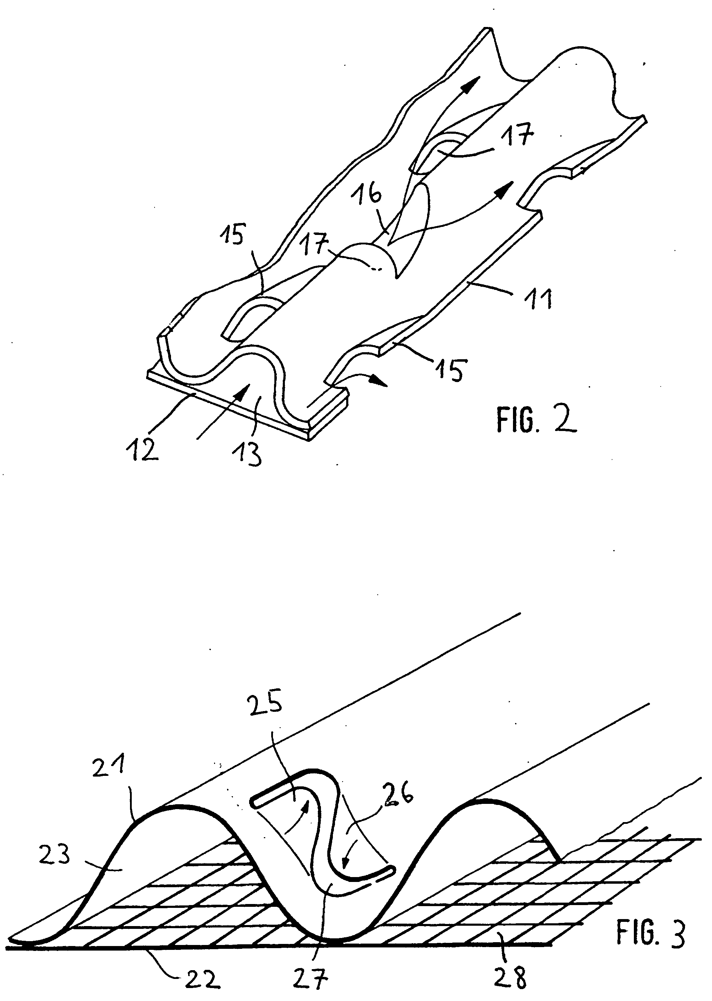

Fig. 2 zeigt einen kleinen Ausschnitt eines Ausführungsbeispiels eines erfindungsgemäßen Auffangelementes. Dieses ist aus strukturierten 11 und glatten Blechlagen 12 aufgebaut, wobei sich frei durchgängige Strömungswege 13 ergeben, die aber durch die spezielle Struktur der strukturierten Blechlage 11 mit Umlenkungen 15, 16 versehen sind. Diese Umlenkungen verwirbeln das Abgas, so dass sich Partikel länger in dem Auffangelement aufhalten und leichter mit anderen Bestandteilen des Abgases reagieren können. Je nach der genauen Ausgestaltung der Umlenkungen 15, 16 schleudern diese auch Partikel gegen die durch die Blechlagen 11, 12 gebildeten Wände der Strömungswege 13, wo sie haften bleiben. Die Umlenkungen 15, 16 haben Öffnungs- oder Anstellwinkel von beispielsweise 20° bis 90°. Je größer der Anstellwinkel zur Strömungsrichtung, desto größer ist die erzielte Umlenkung und die Verwirbelung, jedoch bei exponentiell steigendem Druckverlust Ein Optimum des Winkels liegt zwischen 40° und 50°, wo eine gute Verwirbelung bei einem vertretbaren Druckverlust stattfindet. Die Umlenkungen 15, 16 sind vorzugsweise mit Öffnungen 17 in den strukturierten Blechlagen 11 kombiniert, wodurch sich stärkere Wirbel bilden und eine Durchmischung der Strömungen in benachbarten Strömungswegen 13 erreicht wird.

Ein anderes Ausführungsbeispiel ist in Fig. 3 dargestellt, wiederum nur als kleiner Ausschnitt eines Auffangelementes. Das Auffangelement ist aus einer strukturierten Blechlage 21 und einer glatten Blechlage 22 mit Durchbrechungen 28 aufgebaut und bildet frei durchgängige Strömungswege 23. Flügelähnliche Umlenkungen 25, 26 in Verbindung mit kurvenförmigen Öffnungen 27 führen zu den gleichen Effekten wie oben beschrieben. Die Durchbrechungen 28 in den glatten Blechlagen 22 unterstützen die Wirbelbildung und die Durchmischung von Abgasen in dem Auffangelement.

Es wurde festgestellt, dass die Ablagerung von Partikeln insbesondere auch im Bereich der Ein- und Austrittsflächen der Auffangelemente stattfindet. Deshalb wird nach einer Ausführungsform das Auffangelement in Form mehrerer hintereinandergeschalteter schmaler Wabenkörper als Scheibenelemente eingesetzt. Dabei ergeben sich Umlenkungen und/oder Verwirbelungen jeweils im Eintritts- bzw. Austrittsbereich jeder Scheibe. Dabei werden bis zu 10 Elemente bevorzugt.

Mit der vorliegenden Erfindung wird ein Auffangsystem für Rußpartikel vorgeschlagen, das herkömmliche Filtersysteme ersetzen kann und gravierende Vorteile gegenüber diesen Systemen bringt:

Zum einen kann es nicht verstopfen und der durch das System erzeugte Druckabfall nimmt mit der Betriebsdauer nicht so schnell zu wie bei Filtersystemen, weil die Partikel außerhalb des Fluidstromes haften und zum anderen bewirkt es vergleichsweise geringe Druckverluste, weil es ein offenes System ist.

**Bezugszeichenliste**

1 Verbrennungskraftmaschine
2 Abgasstrang
3 Oxidationskatalysator
4 Einspeisung eines Additives
5 Auffangelement
6 SCR-Katalysator

11 strukturierte Blechlage
12 glatte Blechlage
13 Strömungsweg
14 -
15 Umlenkung
16 Umlenkung
17 Öffnung

21 strukturierte Blechlage
22 glatte Blechlage
23 Strömungsweg
24 -
25 Umlenkung

26 Umlenkung
27 Öffnung
28 Durchbrechung

**Patentansprüche**

1. Verfahren zum Beseitigen von Ruß-Partikeln aus einem Abgas einer Verbrennungskraftmaschine (1), insbesondere eines Dieselmotors, wobei das Abgas durch ein frei durchströmbare, getrennte Strömungswege aufweisendes, aber mit einer Vielzahl von Umlenkungen (15, 16; 25, 26) und/oder Verwirbelungs- und Beruhigungszonen versehenes Auffangelement (5) geleitet wird, in dem

   - zumindest ein Teil der Partikel so lange festgehalten bzw. herumgewirbelt wird, dass eine genügende Wahrscheinlichkeit zur Reaktion mit im Abgas vorhandenem Stickstoffdioxid bis zur weitgehenden Beseitigung der aufgefangenen Partikel besteht und
   - eine Durchmischung der Strömungen in benachbarten Strömungswegen erreicht wird.

2. Verfahren nach Anspruch 1, wobei das Auffangelement (5) gleichzeitig ein Mischelement für die gleichmäßige Verteilung eines Reduktionsmittels, insbesondere Harnstoff, ist und vor dem Auffangelement das Reduktionsmittel zugeführt (4) wird.

3. Verfahren nach Anspruch 1 oder 2, wobei die Partikel durch Umlenkungen (15, 16; 25, 26) des Abgases gegen Wände (11, 12, 21, 22) des Auffangelementes (5) geschleudert werden, wo sie sich festsetzen und/oder mit anderen Partikel agglomerieren können.

4. Verfahren nach Anspruch 3, wobei mit einer Umlenkung (15, 16; 25, 26) jeweils 2% bis 15% der im Abgas noch enthaltenen Partikel gegen die Wände (11, 12, 21, 22) des Auffangelementes (5) geschleudert werden, wobei vorzugsweise so viele Umlenkungen (15, 16; 25, 26) breitgestellt werden, dass die gesamte Menge Partikel gegen die Wände (11, 12, 21, 22) geschleudert werden.

5. Abgassystem eines Kraftfahrzeuges umfassend zumindest ein Auffangelement (5) zum Auffangen von Ruß-Partikeln aus einem das Auffangelement (5) durchströmenden Abgas, wobei das Auffangelement (5) für das Abgas getrennte, frei durchströmbare Strömungswege (13; 23) aufweist, die Strömungswege (13; 23) aber so gestaltet sind, dass sich Umlenkungen (15, 16; 25, 26) oder Verwirbelungszonen und Beruhigungszonen ergeben sowie Öffnungen (17; 27) bzw. Durchbrechungen (28) zur Durchmischung der Abgas-Strömungen benachbarter Strömungswege (13; 23) vorhanden sind, wobei dem zumindest einen Auffangelement (5) wenigstens einer der folgenden Katalysatoren vorgeschaltet ist:

- Oxidationskatalysator;
- Heizkatalysator, ggf. mit vor- oder nachgeschalteter Heizscheibe; der ein
- Hydrolysekatalysator, vorhanden ist.

6. Abgassystem nach Anspruch 5, wobei das Auffangelement (5) mindestens einen metallischen Wabenkörper aus Blechlagen (11, 12; 21, 22) umfasst, wobei die Blechlagen (11, 12; 21, 22) in an sich bekannter Weise zumindest teilweise so strukturiert sind, dass sich für das Abgas frei durchströmbare Strömungswege (13; 23) mit Hindernissen oder Umlenkungen (15, 16; 25, 26) ergeben.

7. Abgassystem nach Anspruch 6, bei dem die Hindernisse oder Umlenkungen (15, 16; 25, 26) so ausgeführt sind, dass jeweils zwischen 2% und 15% der im Abgas noch enthaltenen Partikel gegen die Wände (11, 12, 21, 22) des Auffangelementes (5) geschleudert werden.

8. Abgassystem nach einem der Ansprüche 5 bis 7, wobei zumindest ein Teil der Wände (11, 12; 21, 22) der Strömungswege (13; 23) des Auffangelements (5) beschichtet ist, insbesondere mit einem Washcoat aus Aluminiumoxid.

9. Abgassystem nach einem der Ansprüche 5 bis 8, wobei das Auffangelement (5) sich konusförmig erweiternde Kanäle umfasst.

10. Abgassystem nach einem der Ansprüche 5 bis 9, wobei die die Strömungswege bildenden Wände des Auffangelements (5) eine Wandstärke in einem Bereich zwischen 0,02 und 0,11 mm aufweisen, bevorzugt zwischen 0,04 und 0,08 mm.

11. Abgassystem nach einem der Ansprüche 5 bis 10, wobei das Auffangelement (5) als Strömungswege Kanäle hat und die Zelldichte im Bereich zwischen 3,875 $^{Zellen}/_{cm}2$ (25 cpsi) bis 155 $^{Zellen}/_{cm}2$ (1000 cpsi) liegt, bevorzugt zwischen 31 $^{Zellen}/_{cm}2$ (200 cpsi) und 62 $^{Zellen}/_{cm}2$ (400 cpsi).

12. Abgassystem nach einem der Ansprüche 5 bis 11, wobei das Auffangelement (5) ein Volumen hat, das für die Verwendung mit einem Dieselmotor etwa 0,5 bis 0,8 Liter pro 100 kW des Dieselmotors beträgt.

13. Abgassystem nach einem der Ansprüche 5 bis 12, wobei dem zumindest einen Auffangelement (5) ein Turbolader vor- oder nachgeschaltet ist.

14. Abgassystem nach einem der Ansprüche 5 bis 13, wobei dem zumindest einen Auffangelement (5) poröse Wände aufweisender Rußfilter vor- oder nachgeschaltet ist.

15. Abgassystem nach einem der Ansprüche 5 bis 14, wobei dem zumindest einem Auffangelement (5) eine Additivzugabe (4) vor- oder nachgeschaltet ist.

16. Verwendung zumindest eines Auffangelement (5) in einem Abgasstrang (2) einer Verbrennungskraftmaschine (1), insbesondere eines Dieselmotors, wobei das Auffangelement (5) zum Auffangen von Ruß-Partikeln aus einem das Auffangelement (5) durchströmenden Abgas dient und für das Abgas getrennte, frei durchströmbare Strömungswege (13; 23) aufweist, die Strömungswege (13; 23) aber so gestaltet sind, dass sich Umlenkungen (15, 16; 25, 26) oder Verwirbelungszonen und Beruhigungszonen ergeben sowie Öffnungen (17; 27) bzw. Durchbrechungen (28) zur Durchmischung der Abgas-Strömungen benachbarter Strömungswege (13; 23) vorhanden sind

17. Verwendung eines Auffangelements (5) nach Anspruch 16 in Kombination mit zumindest einer vor- oder nachgeschalteten Additivzugabe (4).

18. Verwendung eines Auffangelements (5) nach Anspruch 16 oder 17 in Kombination mit zumindest einem Katalysator (3, 6).

19. Verwendung eines Auffangelements (5) nach einem der Ansprüche 16 bis 18 in Kombination mit zumindest einem vor- und/oder nachgeschalteten Oxidationskatalysator (3), wovon zumindest einer nitrose Gase ($NO_x$) zu Stickstoffdioxid ($NO_2$) oxidiert.

20. Verwendung eines Auffangelements (5) nach einem der Ansprüche 16 bis 19 in Kombination mit zumindest einem vor- und/oder nachgeschalteten Turbolader, wobei das Auffangelement (5) motomah und/oder in Unterbodenposition angebracht ist.

21. Verwendung eines Auffangelements nach einem der Ansprüche 16 bis 20 in einem Dieselmotor-Abgasstrang kombiniert mit einem vorgeschalteten Turbolader, dem wiederum ein Oxidationskatalysator vorgeschaltet ist.

**Claims**

1. Method for removing soot particles from an exhaust gas of an internal combustion engine (1), in particular a diesel engine, wherein the exhaust gas being fed through a collecting element (5) comprising separate flow paths through which the exhaust gas can flow freely but wherein the collecting element (5) is provided with a multiplicity of deviations (15, 16; 25, 26) and/or swirl-inducing and calming zones, wherein

- at least some of the particles are retained or swirled around long enough to ensure that there is an adequate probability for a reaction with nitrogen dioxide present in the exhaust gas until the collected particles have largely been eliminated and
- mixing the exhaust flows in adjacent flow paths is achieved.

2. Method according to claim 1, wherein the collecting element (5) simultaneously being a mixing element for the uniform distribution of a reducing agent, in particular urea, and the reducing agent being supplied (4) upstream of the collecting element.

3. Method according to claim 1 or 2, wherein the particle being thrown, by deviations (15, 16; 25, 26) of the exhaust gas, against walls (11, 12, 21, 22) of the collecting element (5) where they can stick and/or agglomerate with other particles.

4. Method according to claim 3, wherein by each deviation (15, 16; 25, 26) 2 % to 15 % of the particles still contained in the exhaust gas are thrown against the walls (11, 12, 21, 22) of the collecting element (5), wherein preferably so many deviations (15, 16; 25, 26) are provided that the entire quantity of a particles is thrown against the walls (11, 12, 21, 22).

5. Exhaust gas system of a motor vehicle comprising at least one collecting element (5) for collecting soot particles from an exhaust gas being fed through the collecting element (5), wherein the collecting element (5) has separate flow paths (13; 23) through which the exhaust gas can flow freely but wherein said flow paths (13; 23) are so shaped that deviations (15, 16; 25, 26) or swirl-inducing zones and calming zones are provided as well as openings (17; 27) and throughholes (28) respectively for mixing the exhaust flows of adjacent flow paths (13; 23), wherein at least one of the following catalysts are provided in front of said at least one collecting element (5):

- oxidation catalytic converter;
- heat generating catalyst, where applicable comprising an upstream or downstream positioned heating disc, or
- hydrolysis catalytic converter.

6. Exhaust gas system according to claim 5, wherein the collecting element (5) comprises at least one metallic honeycomb body made up of steal-metal layers (11, 12; 21, 22) wherein the sheet-metal layers (11, 12; 21, 22) being at least in part structured in a known manner per se in such a way that flow paths (13; 23) through which the exhaust gas can flow freely and which have obstacles or deviations (15, 16; 25, 26) are obtained.

7. Exhaust gas system according to claim 6, in which the obstacles or deviations (15, 16; 25, 26) are embodied in such a way that between 2 % and 15 % of the particles still contained in the exhaust gas are thrown against the walls (11, 12; 21, 22) of the collecting element (5) in each case.

8. Exhaust gas system according to one of claims 5 to 7, wherein at least some of the walls (11, 12; 21, 22) of the flow paths (13; 23) of the collecting element (5) being coated, in particular with a washcoat of aluminium oxide.

9. Exhaust gas system according to one of claims 5 to 8, wherein the collecting element (5) comprises channels being a conical.

10. Exhaust gas system according to one of claims 5 to 9, wherein the walls forming the flow paths of the collecting element (5) have a wall thickness in the range of between 0.02 and 0.11 mm, preferably between 0.04 and 0.08 mm.

11. Exhaust gas system according to one of claims 5 to 10, wherein the collecting element (5) has flow paths being a channels and the cell density is in the range of between 3,875 cells/cm$^2$ [25 cpsi] to 155 cells/cm$^2$ [1000 cpsi], in particular between 31 cells/cm$^2$ [200 cpsi] and 62 cells/cm$^2$ [400 cpsi].

12. Exhaust gas system according to one of claims 5 to 11, wherein the collecting element has a volume which is about 0.5 to 0.8 litre/100 kW of a diesel engine if used in connection with a diesel engine.

13. Exhaust gas system according to one of claims 5 to 12, wherein a turbo charger is provided upstream or downstream of said at least one collecting element (5).

14. Exhaust gas system according to one of claims 5 to 13, wherein a soot filter comprising porous walls is provided upstream or downstream of said at least one collecting element (5).

15. Exhaust gas system according to one of claims 5 to 14, wherein an additive supply (4) is provided upstream or downstream of said at least one collecting element (5).

**16.** Use of at least one collecting element (5) in an exhaust pipe (2) of an internal combustion engine (1), in particular a diesel engine, wherein the collecting element (5) is provided for collecting soot particles from an exhaust gas flowing through the collecting element (5) and said collecting element (5) has separate flow paths (13; 23) through which the exhaust gas can flow freely, but said flow paths (13; 23) are shaped so that deviations (15, 16; 25, 26) or swirl-inducing zones and calming zones are provided as well as openings (17; 27) and throughholes (28) respectively for mixing the exhaust flows of adjacent flow paths (13; 23).

**17.** Use of a collecting element (5) according to claim 16 in combination with at least one additive supply (4) positioned upstream or downstream.

**18.** Use of a collecting element (5) according to claim 16 or 17 in combination with at least one catalytic converter (3, 6).

**19.** Use of a collecting element (5) according to one of claims 16 to 18 in combination with at least one oxidation catalytic converter being provided upstream or downstream, wherein at least one of said oxidation catalyst converters oxidizes nitrous gases (NO$_x$) to give nitrogen dioxide (NO$_2$).

**20.** Use of a collecting element (5) according to one of claims 16 to 19 in combination with at least one turbo charger being positioned upstream or downstream, wherein said collecting element (5) being mounted close the engine and/or in an underfloor position.

**21.** Use of a collecting element according to one of claims 16 to 20 in a diesel-engine exhaust pipe in combination with an upstream positioned turbo charger, which, in turn, has an oxidation catalyst converter arranged upstream of it.

**Revendications**

**1.** Procédé destiné à éliminer des particules de suie d'un gaz d'échappement d'une machine à combustion interne (1), notamment d'un moteur diesel, dans quel cas le gaz d'échappement est guidé à travers un élément collecteur (5) présentant des trajets d'écoulement séparés à travers lesquels le gaz d'échappement peut s'écouler librement, mais dans quel cas l'élément collecteur (5) a une multiplicité de déviations (15, 16 ; 25, 26) et/ou des zones de tourbillonnement et d'apaisement, procédé dans lequel

- au moins une partie des particules est retenue ou tourbillonnée aussi longtemps qu'il existe une probabilité adéquate pour la réaction avec du dioxyde d'azote présent dans le gaz d'échappement jusqu'à ce que les particules recueillies soient sensiblement éliminées et

- un mélange des flux dans des trajets d'écoulement adjacents est obtenu.

**2.** Procédé selon la revendication 1, l'élément collecteur (5) étant en même temps un élément mélangeur pour la répartition uniforme d'un agent de réduction, notamment d'urée, et l'agent de réduction étant alimenté (4) en amont de l'élément collecteur.

**3.** Procédé selon la revendication 1 ou 2, dans lequel les particules sont projetées par des déviations (15, 16 ; 25, 26) du gaz d'échappement contre des parois (11, 12, 21, 22) de l'élément collecteur (5), ou elles peuvent adhérer et/ou agglomérer avec d'autres particules.

**4.** Procédé selon la revendication 3, dans lequel avec une déviation (15, 16 ; 25, 26) respectivement 2 % à 15 % des particules encore contenues dans le gaz d'échappement sont projetés contre les parois (11, 12, 21, 22) de l'élément collecteur (5), dans quel cas autant de déviations (15, 16 ; 25, 26) sont de préférence mises à disposition, que la quantité totale des particules est projetée contre les parois (11, 12, 21, 22).

**5.** Système de gaz d'échappement d'un véhicule automobile comportant au moins un élément collecteur (5) pour recueillir des particules de suie d'un gaz d'échappement parcourant l'élément collecteur (5), dans quel cas l'élément collecteur (5) présente des trajets d'écoulement séparés (13 ; 23) à travers lesquels le gaz d'échappement peut s'écouler librement, mais dans quel cas les trajets d'écoulement (13 ; 23) sont configurés de telle façon que des déviations (15, 16; 25, 26) ou des zones de tourbillonnement et des zones d'apaisement se présentent ainsi qu'il existe des ouvertures (17 ; 27), respectivement des trous de passage (28), pour mélanger les flux de gaz d'échappement de trajets d'écoulement adjacents (13 ; 23), l'au moins un élément collecteur (5) étant précédé d'au moins un des catalyseurs suivants :

- catalyseur d'oxydation ;

- catalyseur pouvant être chauffé, le cas échéant avec un disque chauffant monté en amont ou en aval,

- catalyseur d'hydrolyse.

**6.** Système de gaz d'échappement selon la revendication 5, dans quel cas l'élément collecteur (5) comporte au moins un corps en nids d'abeilles métallique de couches de tôle (11, 12 ; 21, 22), les couches de tôle (11, 12 ; 21, 22) étant structurées de manière connue en soi au moins partiellement de telle manière qu'on obtient des trajets d'écoulement (13 ; 23) à travers lesquels le gaz d'échappement peut s'écouler librement et qui ont des obstacles ou des déviations (15, 16 ; 25, 26).

**7.** Système de gaz d'échappement selon la revendication 6, dans lequel les obstacles ou les déviations (15, 16 ; 25, 26) sont réalisés de telle manière que respectivement entre 2 % et 15 % des particules étant encore contenues dans le gaz d'échappement sont projetés contre les parois (11, 12, 21, 22) de l'élément collecteur (5).

**8.** Système de gaz d'échappement selon l'une des revendications 5 à 7, dans quel cas au moins une partie des parois (11, 12 ; 21, 22) des trajets d'écoulement (13 ; 23) de l'élément collecteur (5) est revêtue, notamment d'un imprégnateur en oxyde d'aluminium.

**9.** Système de gaz d'échappement selon l'une des revendications 5 à 8, l'élément collecteur (5) comportant des canaux s'élargissant en forme de cône.

**10.** Système de gaz d'échappement selon l'une des revendications 5 à 9, les parois de l'élément collecteur (5) formant les trajets d'écoulement ayant une épaisseur de paroi de l'ordre entre 0,02 et 0,11 mm, de préférence entre 0,04 et 0,08 mm.

**11.** Système de gaz d'échappement selon l'une des revendications 5 à 10, dans quel cas en tant que trajets d'écoulement l'élément collecteur (5) a des canaux et la densité cellulaire est de l'ordre entre 3,875 cellules/cm$^2$ [25 cpsi] et 150 cellules/cm$^2$ [1000 cpsi], de préférence entre 31 cellules/cm$^2$ [200 cpsi] et 62 cellules/cm$^2$ [400 cpsi].

**12.** Système de gaz d'échappement selon l'une des revendications 5 à 11, dans quel cas l'élément collecteur (5) a un volume qui pour l'utilisation avec un moteur diesel comporte environ 0,5 à 0,8 litres/100 kW du moteur diesel.

**13.** Système de gaz d'échappement selon l'une des revendications 5 à 12, dans quel cas un turbocompresseur est monté en amont ou en aval de l'au moins un élément collecteur (5).

**14.** Système de gaz d'échappement selon l'une des revendications 5 à 13, dans quel cas un filtre à suie ayant des parois poreuses est prévu en amont ou en aval de l'au moins un élément collecteur (5).

**15.** Système de gaz d'échappement selon l'une des revendications 5 à 14, dans quel cas une alimentation en additif (4) est prévue en amont ou en aval de l'au moins un élément collecteur (5).

**16.** Utilisation d'au moins un élément collecteur (5) dans un brin de gaz d'échappement (2) d'une machine à combustion interne (1), notamment d'un moteur diesel, dans quel cas l'élément collecteur (5) sert à recueillir des particules de suie d'un gaz d'échappement parcourant l'élément collecteur (5) et a des trajets d'écoulement séparés (13 ; 23) à travers lesquels le gaz d'échappement peut s'écouler librement, mais les trajets d'écoulement (13 ; 23) sont configurés de telle façon que des déviations (15, 16 ; 25, 26) ou des zones de tourbillonnement et des zones d'apaisement se présentent ainsi qu'il existe des ouvertures (17 ; 27), respectivement des trous de passage (28), pour mélanger les flux de gaz d'échappement de trajets d'écoulement adjacents (13 ; 23).

**17.** Utilisation d'un élément collecteur (5) selon la revendication 16 en combinaison avec au moins une alimentation en additif (4) prévue en amont ou en aval.

**18.** Utilisation d'un élément collecteur (5) selon la revendication 16 ou 17 en combinaison avec au moins un catalyseur (3, 6).

**19.** Utilisation d'un élément collecteur (5) selon l'une des revendications 16 à 18 en combinaison avec au moins un catalyseur d'oxydation (3) prévu en amont et/ou en aval, dont au moins un oxyde des oxydes d'azote (NO$_x$) en dioxyde d'azote (NO$_2$).

**20.** Utilisation d'un élément collecteur (5) selon l'une des revendications 16 à 19 en combinaison avec au moins un turbocompresseur prévu en amont et/ou en aval, l'élément collecteur (5) étant monté près du moteur et/ou en position de sous-plancher.

**21.** Utilisation d'un élément collecteur selon l'une des revendications 16 à 20 dans un brin de gaz d'échappement de moteur diesel combiné avec un turbocompresseur prévu en amont qui lui-même est précédé d'un catalyseur d'oxydation.

Fig. 1

FIG. 2

FIG. 3